# EUROPÄISCHE PATENTSCHRIFT

(11) **EP 2 410 229 B1**
(45) Veröffentlichungstag und Bekanntmachung des Hinweises auf die Patenterteilung: **04.05.2016**
(21) Anmeldenummer: 11173899.3
(22) Anmeldetag: 14.07.2011
(51) Int. Cl.: F16L 37/092, F16L 33/22, F16L 17/035, F16L 55/027, F15D 1/04

(54) **Leitungsverbindungseinrichtung, Montageverfahren für eine Leitungsverbindungseinrichtung sowie Ventilgehäuse mit einer Leitungsverbindungseinrichtung**
Conduit connection device, assembly method for same and valve housing with a conduit connection device
Dispositif de raccord de conduite, procédé de montage d'un dispositif de raccord de conduite ainsi que boîtier de soupape doté d'un dispositif de raccord de conduite

(30) Priorität: 21.07.2010 DE 102010031703
(43) Veröffentlichungstag der Anmeldung: 25.01.2012
(73) Patentinhaber: KNORR-BREMSE Systeme für Nutzfahrzeuge GmbH, 80809 München (DE)
(72) Erfinder: Kántor, Kornél, 6000 Kecskemét (HU); Mihályi, Attila, 6000 Kecskemét (HU); Tóth, János, 6000 Kecskemét (HU)
(74) Vertreter: Schönmann, Kurt

(56) Entgegenhaltungen:
- EP-A1- 1 199 506
- WO-A1-2006/037967
- WO-A1-2007/118855
- WO-A1-2009/068934
- DE-A1- 1 942 297
- DE-A1- 10 162 657
- GB-A- 2 160 279
- US-A- 5 348 354

## Beschreibung

Die vorliegende Erfindung betrifft eine Leitungsverbindungseinrichtung für ein Fluid, ein Verfahren zur Montage einer Leitungsverbindungseinrichtung und ein Ventilgehäuse mit einer Leitungsverbindungseinrichtung.

### Hintergrund

In vielen Bereichen der Fluidtechnik ist es notwendig, Fluidleitungen wie beispielsweise Rohre miteinander oder mit Fluidanschlüssen zu verbinden. Für derartige Verbindungen werden Leitungsverbindungseinrichtungen oder Anschlusseinrichtungen eingesetzt. Leitungsverbindungseinrichtungen sollen ermöglichen, dass ein Fluid zwischen einem Leitungsabschnitt und einem Anschluss strömen kann und eine zuverlässige und leckfreie Verbindung bieten. Die Strömung sollte durch die Verbindung möglichst ungestört verlaufen können. Häufig wird dabei ein Leitungsabschnitt in die Verbindungseinrichtung eingeführt und darin aufgenommen. Beispielsweise bei unter hohem Druck stehenden Systemen kann dies zu erheblichen Anforderungen an die Konstruktion der Verbindungseinrichtung führen. Darüber hinaus sollte eine Leitungsverbindungseinrichtung keinen unnötigen Montageaufwand erfordern. Dies gilt insbesondere bei mobilen Anwendungen, wenn beispielsweise Rohre an ein Ventilgehäuse einer Luftaufbereitungsanlage eines Kraftfahrzeuges angeschlossen werden sollen.

In dem Dokument WO 2007/118855 A1 ist beispielsweise ein Steckverbinder für Rohrleitungen beschrieben. Es ist vorgesehen, dass ein Rohrabschnitt in einem Einsatzelement aufgenommen und von einem Klemmring gehalten wird. Klemmring und Einsatzelement liegen an einem Dichtungselement an. Das Einsatzelement erlaubt es einem Fluid, durch es zu einem Anschluss zu strömen.

Die DE 101 62 657 A1 beschreibt ein Anschlussstück für Fluidleitungen, bei dem ein Dichtungsring durch eine Rastverbindung an einem Einsatzkörper befestigt ist. Der Dichtungsring ist dabei endständig angeordnet und bietet einen Anschluss zum fluidtechnischen Gerät.

Die EP 1 199 506 A1 beschreibt eine Leitungsverbindungseinrichtung, bei der ein Dichtelement zwischen einem Einsatzelement und einem Fluidanschluss festgelegt ist.

Die DE 1 942 297 beschreibt eine Schlauchverbindung, bei der ein erstes sich verjüngendes Schlauchende in ein zweites sich nicht verjüngendes Schlauchende geschoben wird. Das sich verjüngende Schlauchende weist eine gekrümmte Form und zusätzliche Öffnungen in der Schlauchwandung auf, um Turbulenzen vorzubeugen.

Eine gattungsgemäße Leitungsverbindungseinrichtung und ein zugehöriges Montageverfahren sind aus der GB 2 160 279 A1 bekannt.

Die gattungsgemäße Leitungsverbindungseinrichtung ist leicht montierbar. Die Erfindung stellt eine Leitungsverbindungseinrichtung mit guten Strömungseigenschaften bereit. Außerdem wird ein Ventilgehäuse mit einer solchen Leitungsverbindungseinrichtung bereitgestellt.

Dies wird durch die Merkmale der unabhängigen Ansprüche erreicht.

Vorteilhafte Ausgestaltungen und Weiterbildungen der Erfindung ergeben sich aus den abhängigen Ansprüchen.

Gemäß einem Aspekt der Erfindung ist eine Leitungsverbindungseinrichtung zur Verbindung eines Leitungsabschnitts mit einem Fluidanschluss vorgesehen, die einen Aufnahmebereich für einen Leitungsabschnitt, eine den Aufnahmebereich zumindest teilweise umgebende Halteeinrichtung, die es vermag, auf zumindest einen Teil des Leitungsabschnitts eine Haltekraft auszuüben, ein den Aufnahmebereich zumindest teilweise umgebendes Einsatzelement sowie eine Dichteinrichtung aufweist, die zwischen der Halteeinrichtung und dem Einsatzelement angeordnet oder anordenbar ist. Die Dichteinrichtung ist über Rastverbindungseinrichtungen einrastend mit dem Einsatzelement und der Halteeinrichtung verbunden oder verbindbar. Durch die Rastverbindung lassen sich die Komponenten leicht aneinanderfügen und in die korrekte Position bringen. Da die Rastverbindungen die Komponenten in der gewünschten Ausrichtung zueinander halten, lassen sich Dichteinrichtung und Halteeinrichtung beziehungsweise Einsatzelement leicht vormontieren und als Baugruppe weiterverwenden, beispielsweise bei einem Einbau in ein Gehäuse. Das Einsatzelement vermittelt eine Fluidverbindung zwischen dem Aufnahmebereich und dem Fluidanschluss. Das Einsatzelement kann eine Außenbewandung aufweisen, welche den Aufnahmebereich zumindest teilweise umgibt. Ferner kann eine innerhalb des Aufnahmebereichs angeordnete Innenbewandung des Einsatzelements vorgesehen sein. Zwischen der Innenbewandung und der Außenbewandung kann zumindest ein Teil des Leitungsabschnitts aufnehmbar sein. Zweckmäßigerweise ist der Leitungsabschnitt dazu vorgesehen, nach der Montage der Leitungsverbindungseinrichtung in diese eingeführt zu werden. Der Leitungsabschnitt kann ein Rohrabschnitt oder ein Schlauchabschnitt sein und zu einer beliebigen Leitung beziehungsweise einem Rohr oder Schlauch gehören. Es ist vorgesehen, dass der Leitungsabschnitt zum Leiten eines beliebigen Fluids, einer Flüssigkeit oder einem Gas, ausgebildet ist. Als Fluid kann beispielsweise Wasser, Druckluft, Wasserdampf, ein Brennstoff oder ein Abgas dienen. Die Leitungsverbindungseinrichtung kann separat von einem Leitungsabschnitt und einem Fluidanschluss ausgebildet sein und insbesondere unabhängig von derartigen Komponenten vormontiert werden. Der Fluidanschluss kann zu jeder beliebigen Art von Leitung und/oder einer Ventilanordnung gehören. Insbesondere kann der Fluidanschluss zu einer in einem Gehäuse angeordneten Leitungs- beziehungsweise Rohranordnung gehören. Die Leitungsverbindungseinrichtung ist besonders für Kraftfahrzeuge, Nutzfahrzeuge, Lastkraftwagen und/oder Traktoren geeignet. Insbesondere kann die Leitungsverbindungseinrichtung zur Verbindung von Leitungen mit einem Ventilgehäuse verwendet werden, beispielsweise einem Ventilgehäuse einer Druckluftaufbereitungsanlage. Die Rastverbindung zur Halteeinrichtung und zum Einsatzelement kann als direkte Verbindung ausgebildet sein, bei der die Dichteinrichtung in Materialkontakt mit einer oder beiden dieser Komponenten steht. Es kann auch eine indirekte Verbindung vorgesehen sein, bei der ein zusätzliches Element zwischen Dichteinrichtung und Halteeinrichtung beziehungsweise Einsatzelement vorgesehen ist. Das zusätzliche Element kann mit der Dichteinrichtung oder der Halteeinrichtung beziehungsweise dem Einsatzelement kraftschlüssig verbunden sein. Es ist mehr als eine Rastverbindung vorgesehen. Die Rastverbindung kann derart ausgebildet sein, dass beim Montieren ein oder mehrere elastische Elemente einrasten. Sie kann eine Schnappverbindung beziehungsweise Clipsverbindung sein. Erfindungsgemäß ist vorgesehen, mehr als eine Rastverbindung zu verwenden. In diesem Fall kann eine beliebige Kombination von Rastverbindungen und indirekten und direkten Verbindungen vorgesehen sein. Die Halteeinrichtung kann einstückig oder mehrteilig ausgebildet sein. Insbesondere kann die Halteeinrichtung eine Haltevorrichtung aufweisen, die einen Klemmring verschiebbar aufnimmt. Klemmring und Haltevorrichtung können somit die Halteeinrichtung bilden. Auch das Einsatzelement kann einstückig oder mehrteilig ausgebildet sein. Das Einsatzelement kann ein oder mehrere Führungselemente aufweisen, die sich an einer Gehäusefläche abzustoßen vermögen, an welcher der Fluidanschluss angeordnet ist. Zusätzlich oder alternativ kann das Einsatzelement mit einer Vertiefung ausgebildet sein, die eine Aufnahme des Fluidanschlusses zumindest teilweise erlaubt. Somit kann eine passgenaue Anordnung des Einsatzelementes beziehungsweise der Leitungsverbindungsanordnung in Bezug auf Gehäuse und Fluidanschluss gewährleistet werden.

Die Dichteinrichtung kann Rastaufnahmen zur Aufnahme eines Rastelements des Einsatzelements und der Halteeinrichtung aufweisen. Somit lässt sich die Dichteinrichtung einfach herstellen und bietet eine Möglichkeit, ein zugehöriges entsprechend ausgeformtes Rastelement aufzunehmen. Es ist selbstverständlich auch möglich, dass die Dichteinrichtung mindestens ein Rastelement aufweist, das in eine Rastaufnahme des entsprechenden Gegenelements einführbar ist. Darüber hinaus ist es vorstellbar, dass die Dichteinrichtung sowohl eine Rastaufnahme als auch ein Rastelement aufweist. Rastelement und Rastaufnahme können in diesem Fall der gleichen Rastverbindung zugeordnet sein, also zur Verbindung mit der gleichen Komponente der Leitungsverbindungseinrichtung dienen. Sie können auch unterschiedlichen Verbindungen zugeordnet sein, also zur Verbindung mit unterschiedlichen Komponenten dienen. Ein Rastelement weist zweckmäßigerweise ein vorstehendes Element mit einer Rastnase auf, die in der Rastaufnahme einrastet und ein unerwünschtes Lösen der Rastverbindung verhindert.

Es ist zweckmäßig, wenn die Dichteinrichtung zumindest teilweise aus einem elastischen Dichtmaterial ausgebildet. Das elastische Dichtmaterial kann insbesondere ein Gummimaterial sein. Somit kann eine gute Abdichtung geboten werden. Ferner kann das elastische Material gut als elastische Komponente für eine Rastverbindung dienen. Auch lässt sich ein derartiges Material auf leichte Art in der gewünschten Form ausbilden, etwa durch ein Gussverfahren.

In einer Weiterbildung kann die Dichteinrichtung an einem Dichtungshalter angebracht sein. Der Dichtungshalter kann dabei aus einem steifen Material, etwa einem Kunststoff oder einem metallischen Material bestehen. Dadurch kann dem Dichtelement zusätzliche Stabilität verliehen werden. Zweckmäßigerweise ist die Dichteinrichtung an dem Dichtungshalter befestigt, etwa durch eine Verklebung. Dies erleichtert die Montage, da Dichtelement und Dichtungshalter gemeinsam eingebaut werden können und sich in einer gut definierten Ausrichtung zueinander befinden.

Dabei kann die mindestens eine Rastaufnahme zumindest teilweise durch den Dichtungshalter gebildet sein. Dies erlaubt es einerseits, Dichtungsmaterial einzusparen. Andererseits kann die Rastverbindung versteift und stabilisiert werden.

Die Leitungsverbindungseinrichtung kann zum Verbinden des Leitungsabschnitts mit einem in einer Gehäusevertiefung angeordneten Fluidanschluss in der Gehäusevertiefung aufgenommen oder aufnehmbar sein. Wenn der Fluidanschluss in der Gehäusevertiefung angeordnet ist, kann durch die Rastverbindung beziehungsweise die Rastverbindungen eine leichte Montage erfolgen. Die Leitungsverbindungseinrichtung kann zumindest teilweise vormontiert sein. Durch die Rastverbindungen lässt sich auch erreichen und überprüfen, dass die Dichteinrichtung in der korrekten Lage zu der Halteeinrichtung beziehungsweise dem Einsatzelement montiert wird. Dabei kann ein zeitaufwendiges Ausrichten einzelner Komponenten in einer schwer zugänglichen Vertiefung deutlich vereinfacht oder gar unnötig werden. Die Komponenten der Leitungsverbindungseinrichtung, insbesondere das Einsatzelement, können über ein dem Profil der Vertiefung und/oder des Fluidanschlusses entsprechendes Profil verfügen. Es kann ein Abschlusselement vorgesehen sein, dass auf der dem Fluidanschluss gegenüberliegenden Seite der montierten Leitungsverbindungseinrichtung angebracht oder anbringbar ist, um diese gegen Verschmutzung, Beschädigung und unerwünschte Außeneinwirkungen zu schützen und um die weiteren Komponenten der Leitungsverbindungseinrichtung in der Vertiefung zu halten. Dazu ist zweckmäßigerweise das Abschlusselement am Gehäuse befestigt, etwa durch eine bajonettartige Verbindung.

Andererseits kann die Leitungsverbindungseinrichtung zum Verbinden des Leitungsabschnitts mit einem an einer Außenseite eines Gehäuses angeordneten Fluidanschluss von außen an dem Gehäuse angebracht oder anbringbar sein. Auch in diesem Fall lässt sich die Verbindungseinrichtung einfach montieren. Es ist zweckmäßig, wenn das Einsatzelement oder ein zwischen dem Einsatzelement und dem Gehäuse beziehungsweise dem Fluidanschluss vorgesehenes Element über ein dem Profil des Fluidanschlusses entsprechendes Profil verfügt, so dass der Fluidanschluss zumindest teilweise in diesem Profil aufgenommen werden kann.

Zweckmäßigerweise ist ein Leitungsverbindungsgehäuse mit einer Aufnahmeöffnung für den Leitungsabschnitt vorgesehen. Das Leitungsverbindungsgehäuse kann an dem Gehäuse derart befestigt sein, das es die Leitungsverbindungseinrichtung schützend umgibt. Ferner ist es zweckmäßig, eine Dichtung zur Abdichtung des Leitungsverbindungsgehäuses einzusetzen. Das Leitungsverbindungsgehäuse kann mit dem Gehäuse auf beliebige geeignete Art verbunden beziehungsweise befestigt sein. Es kann beispielsweise verschraubt oder verschweißt sein.

Gemäß einem weiteren Aspekt ist ein Verfahren zur Montage einer oben beschriebenen Leitungsverbindungseinrichtung vorgesehen. Dabei wird eine Dichteinrichtung über Rastverbindungseinrichtungen mit einem Einsatzelement und einer Halteeinrichtung einrastend verbunden. Somit kann auf eine einfache Art eine Vormontage der einrastend verbundenen Elemente erfolgen. Auch lässt eine Montage vor Ort lässt sich einfach durchführen. Durch die Rastverbindung beziehungsweise Rastverbindungen ist dabei sichergestellt, dass Komponenten in einer gewünschten Ausrichtung zueinander stehen und während der Montage auch in der gewünschten Ausrichtung zueinander bleiben.

Es kann vorgesehen sein, dass nach dem einrastenden Verbinden die Leitungsverbindungseinrichtung in eine Gehäusevertiefung eingeführt wird. Somit ist es nicht notwendig, die verrasteten Komponenten innerhalb der Vertiefung zueinander auszurichten, was eine zeitraubende Arbeit sein kann.

Alternativ kann nach dem einrastenden Verbinden die Leitungsverbindungseinrichtung von außen an einem Gehäuse angebracht werden, an dem der Fluidanschluss angeordnet ist. Auch in diesem Fall lässt sich durch die Vormontage und der dadurch schon erfolgte Ausrichtung Arbeitszeit einsparen.

In einer Weiterbildung kann die Leitungsverbindungseinrichtung in einem Leitungsverbindungsgehäuse aufgenommen werden, wobei das Leitungsverbindungsgehäuse mit dem Gehäuse verbunden wird. Das Leitungsverbindungsgehäuse bietet somit Schutz vor unerwünschten Außenwirkungen auf die Leitungsverbindungseinrichtung.

Zweckmäßigerweise wird nach einer derartigen Montage der Leitungsverbindungseinrichtung der Leitungsabschnitt in die Leitungsverbindungseinrichtung eingeführt. Die Montage der Leitungsverbindungseinrichtung, ob in einer Gehäusevertiefung oder an einer Außenseite eines Gehäuses, kann somit unabhängig von dem Leitungsabschnitt erfolgen.

Ein weiterer Aspekt betrifft Merkmale, die unabhängig von den oben diskutierten Merkmalen oder in beliebiger Kombination damit umgesetzt werden können. Gemäß diesem Aspekt ist eine Leitungsverbindungseinrichtung zur Verbindung eines Leitungsabschnitts mit einem Fluidanschluss vorgesehen. Die Leitungsverbindungseinrichtung umfasst einen Aufnahmebereich für den Leitungsabschnitt, in welchen der Leitungsabschnitt in einer definierten Aufnahmerichtung aufgenommen oder aufnehmbar ist und ein Einsatzelement, welches eine Außenbewandung aufweist, die den Aufnahmebereich zumindest teilweise umgibt, sowie eine innerhalb des Aufnahmebereichs angeordnete Innenbewandung. Zwischen der Innenbewandung und der Außenbewandung ist zumindest ein Teil des Leitungsabschnitts aufnehmbar. Die Innenbewandung umgibt einen Innenbereich und verfügt über mindestens eine seitliche beziehungsweise axiale Öffnung, die eine Fluidverbindung zwischen dem Innenbereich und dem außerhalb des Innenbereichs befindlichen Aufnahmebereich erlaubt. Die mindestens eine axiale beziehungsweise seitliche Öffnung verfügt über zumindest eine Teilfläche, deren Flächennormalen schräg oder orthogonal zur Aufnahmerichtung ausgerichtet ist. Somit lässt sich eine strömungstechnisch günstige Fluidverbindung zwischen dem Innenbereich und dem Aufnahmebereich bereitstellen. Darüber hinaus wirkt die Innenbewandung als eine Führung, welche die Montage beziehungsweise Einführung des Leitungsabschnitts erleichtert. Dadurch, dass in der Innenbewandung mindestens eine axiale beziehungsweise seitliche Öffnung vorgesehen ist, kann die Innenbewandung beim Einführen des Leitungsabschnitts mit einer Elastizität beziehungsweise Nachgiebigkeit reagieren, welche das Einführen zusätzlich erleichtert. Darüber hinaus lässt sich durch die mindestens eine seitliche beziehungsweise axiale Öffnung eine Düsenfunktion für die Durchströmung der Innenbewandung erzeugen. Insbesondere für den Fall, dass der Querschnitt des Leitungsabschnitts und der Querschnitt eines an den Fluidanschluss angeschlossenen Leitungssystems nicht übereinstimmen, kann eine verbesserte Durchströmung im Übergangsbereich erreicht werden. Die Aufnahmerichtung entspricht der Einführrichtung des Leitungsabschnitts in die Leitungsverbindungseinrichtung. Sie kann von einer Öffnung des Aufnahmebereichs zum Fluidanschluss verlaufen. Die Aufnahmerichtung kann auch als von dem Aufnahmebereich zum Einsatzelement verlaufend angesehen werden. In der Regel verlaufen Aufnahmerichtung und Außenbewandung des Einsatzelements parallel zueinander. Darüber hinaus fallen für einen Normalbetrieb ohne Turbulenzen eine Strömungsrichtung eines Fluids, das durch den Leitungsabschnitt in den Aufnahmebereich strömt, und Aufnahmerichtung zusammen. Zweckmäßigerweise vermag es das Einsatzelement, eine Fluidverbindung zwischen dem Aufnahmebereich und einem Fluidanschluss zu vermitteln. Es ist vorstellbar, dass der Leitungsabschnitt dazu vorgesehen ist, nach der Montage der Leitungsverbindungseinrichtung in diese eingeführt zu werden. Der Leitungsabschnitt kann ein Rohrabschnitt oder ein Schlauchabschnitt sein und zu einer beliebigen Leitung beziehungsweise einem Rohr oder Schlauch gehören. Es ist vorgesehen, dass der Leitungsabschnitt zum Leiten eines beliebigen Fluids, einer Flüssigkeit oder einem Gas, ausgebildet ist. Als Fluid kann beispielsweise Wasser, Druckluft, Wasserdampf, ein Brennstoff oder ein Abgas dienen. Die Leitungsverbindungseinrichtung kann separat von einem Leitungsabschnitt und einem Fluidanschluss ausgebildet sein und insbesondere unabhängig von derartigen Komponenten vormontiert werden. Der Fluidanschluss kann zu jeder beliebigen Art von Leitung gehören. Insbesondere kann der Fluidanschluss zu einer in einem Gehäuse angeordneten Leitungs- beziehungsweise Rohranordnung gehören. Die Leitungsverbindungseinrichtung ist besonders für Kraftfahrzeuge, Nutzfahrzeuge, Lastkraftwagen und/oder Traktoren geeignet. Insbesondere kann die Leitungsverbindungseinrichtung zur Verbindung von Leitungen mit einem Ventilgehäuse verwendet werden, beispielsweise einem Ventilgehäuse einer Druckluftaufbereitungsanlage. Das Einsatzelement kann einstückig oder mehrteilig ausgebildet sein. Ferner kann das Einsatzelement ein oder mehrere Führungselemente aufweisen, die sich an einer Gehäusefläche abzustoßen vermögen, an welcher der Fluidanschluss angeordnet ist. Zusätzlich oder alternativ kann das Einsatzelement mit einer Vertiefung ausgebildet sein, die eine Aufnahme des Fluidanschlusses zumindest teilweise erlaubt. Somit kann eine passgenaue Anordnung des Einsatzelementes beziehungsweise der Leitungsverbindungsanordnung in Bezug auf Gehäuse und Fluidanschluss gewährleistet werden. Die Innenbewandung kann eine im Wesentlichen orthogonal zur Aufnahmerichtung beziehungsweise Strömungsrichtung eines durch den Leitungsabschnitt strömenden Fluids verlaufende Hauptöffnung zum Innenbereich aufweisen. Somit lässt sich der Strömungsquerschnitt vergrößern. Die Fläche der Hauptöffnung ist zweckmäßigerweise kleiner als die Gesamtfläche der einen oder mehreren seitlichen beziehungsweise axialen Öffnungen. Es ist vorstellbar, dass die axialen beziehungsweise seitlichen Öffnungen schlitzartig ausgebildet sind. Dies erlaubt eine einfache Herstellung. Die Innenbewandung kann ein oder mehrere Wandelemente aufweisen. Die Wandelemente können einander paarweise gegenüberliegend angeordnet sein um eine gute Stabilität und einen symmetrischen Strömungswiderstand für das Fluid zu bieten. Es ist vorstellbar, dass die Wandelemente nicht oder nur teilweise in Kontakt mit einer Innenwand des montierten Leitungsabschnitts stehen. Somit lässt sich eine mechanische Belastung der Wandelemente verringern oder vermeiden. Zweckmäßigerweise erstrecken sich die Wandelemente voneinander separat von dem Einsatzelement in den Aufnahmebereich hinein. Es können insbesondere vier oder fünf Wandelemente ausgebildet sein. Die Wandelemente können im Querschnitt in der Form eines Kreuzes oder eines Sternes angeordnet sein, um eine günstigen Strömungsquerschnitt zu bieten. Sie können auch derart angeordnet sein, dass sie im Querschnitt auf einem im Wesentlichen kreisförmigen Umfang angeordnet sind. Es kann vorgesehen sein, dass der Abstand der Wandelemente voneinander im Querschnitt räumlich veränderlich ist beziehungsweise dass sich die Breite des Innenbereichs ändert. Beispielsweise ist vorstellbar, dass sich der Innenbereich in der Richtung vom Einsatzelement weg verjüngt, um eine gleichmäßigere beziehungsweise günstigere Strömung vom Aufnahmebereich in den Innenbereich zu ermöglichen. Alternativ kann sich der Querschnittsabstand der Wandelemente beziehungsweise die Breite des Innenbereichs zum Einsatzelement hin verringern. Mit derartigen Maßnahmen kann eine Düsenwirkung der Hauptöffnung und der seitlichen beziehungsweise axialen Öffnungen zusammen mit der oder den Wandelementen der Innenbewandung wie gewünscht eingestellt werden.

In einer Weiterbildung kann die Leitungsverbindungseinrichtung eine den Aufnahmebereich zumindest teilweise umgebende Halteeinrichtung umfassen, die es vermag, auf zumindest einen Teil des Leitungsabschnitts eine Haltekraft auszuüben. Es kann auch eine Dichteinrichtung vorgesehen sein, die zwischen der Halteeinrichtung und dem Einsatzelement angeordnet oder anordenbar ist. Die Dichteinrichtung kann über mindestens eine Rastverbindungseinrichtung einrastend mit dem Einsatzelement und/oder der Halteeinrichtung verbunden oder verbindbar sein. Durch die Rastverbindung lassen sich die Komponenten leicht aneinanderfügen und in die korrekte Position bringen. Da die Rastverbindungen die Komponenten in der gewünschten Ausrichtung zueinander halten, lassen sich Dichteinrichtung und Halteeinrichtung beziehungsweise Einsatzelement leicht vormontieren und als Baugruppe weiterverwenden, beispielsweise bei einem Einbau in ein Gehäuse. Die Halteeinrichtung kann einstückig oder mehrteilig ausgebildet sein. Insbesondere kann die Halteeinrichtung eine Haltevorrichtung aufweisen, das einen Klemmring verschiebbar aufnimmt. Somit können Klemmring und Haltevorrichtung eine Halteeinrichtung bilden.

Die Erfindung betrifft außerdem ein Ventilgehäuse mit einer Leitungsverbindungseinrichtung, wie sie oben beschrieben ist. Das Ventilgehäuse kann insbesondere ein Ventilgehäuse einer Luftaufbereitungsanlage eines Kraftfahrzeugs oder eines Nutzfahrzeugs wie einem Traktor sein.

Die Erfindung wird nun mit Bezug auf die begleitenden Zeichnungen anhand bevorzugter Ausführungsformen beispielhaft erläutert

Es zeigen:
- Figur 1: eine Leitungsverbindungseinrichtung.
- Figur 2: eine außen an einem Gehäuse angebrachte Leitungsverbindungseinrichtung.
- Figur 3: eine gedrehte Ansicht der Leitungsverbindungseinrichtung der Figur 2.
- Figur 4: zeigt eine alternative Leitungsverbindungseinrichtung.

Im Folgenden bezeichnen gleiche Bezugszeichen im Wesentlichen gleiche oder funktionsgleiche Elemente.

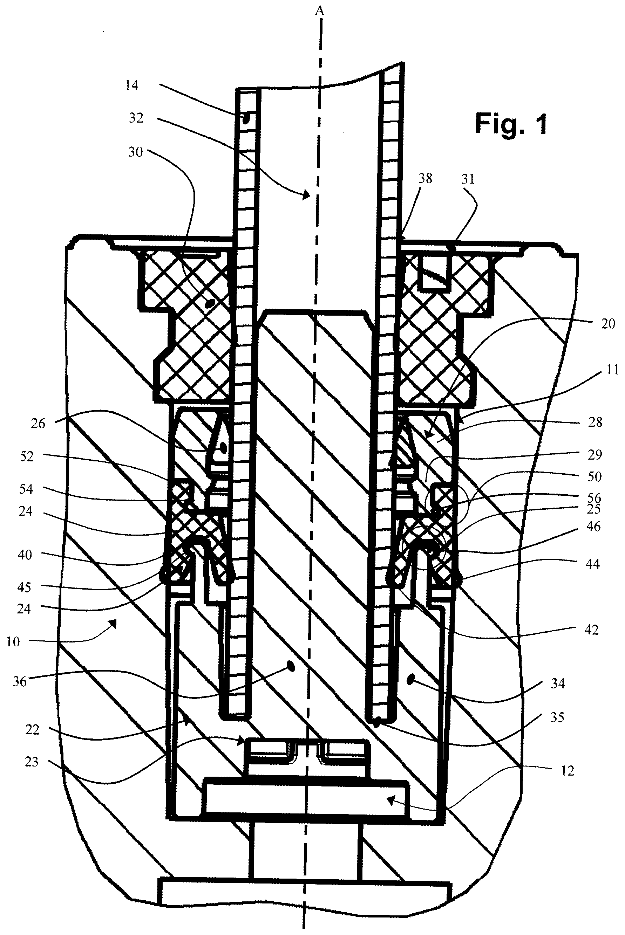

Figur 1 zeigt eine in einem Gehäuse 10 aufgenommene Leitungsverbindungseinrichtung, die in diesem Beispiel als Rohrverbindungseinrichtung 20 ausgeführt ist. In einer Gehäusevertiefung 11 des Gehäuses 10 ist ein Fluidanschluss 12 vorgesehen, der einem Innenbereich des Gehäuses 10 ein Fluid zuführen kann oder ein Fluid aus dem Innenbereich abführen kann. Das Gehäuse 10 kann beispielsweise zu einem Ventilgehäuse einer Druckluftaufbereitungseinrichtung eines Fahrzeugs gehören oder ein Teil einer Ventilanordnung sein. In der Rohrverbindungseinrichtung 20 ist ein Rohrabschnitt 14 aufgenommen, der in diesem Beispiel Druckluft als Fluid führt. Der Rohrabschnitt 14 ist in einer Aufnahmerichtung in die Rohrverbindungseinrichtung 20 eingefügt, die im Wesentlichen parallel zu einer Zentralachse A in Richtung des Fluidanschlusses 12 verläuft. Die Aufnahmerichtung verläuft auch im Wesentlichen parallel oder antiparallel zu einer Fluidströmungsrichtung im Rohrabschnitt 14. Die Rohrverbindungseinrichtung 20 weist ein in die Gehäusevertiefung 11 eingesetztes Einsatzelement 22 auf, das aus einem steifen Material hergestellt sein kann, etwa einem metallischen Material oder bevorzugt einem steifen Kunststoff. Ein als Dichteinrichtung wirkendes Dichtelement 24 ist über eine erste Rastverbindung 25 mit dem Einsatzelement 22 verbunden. Dazu ist in dem aus elastischem Material, wie einer Gummiverbindung, bestehenden Dichtelement 24 eine als Vertiefung ausgebildete Rastaufnahme 40 vorgesehen. Die Rastaufnahme 40 ist von einer inneren Dichtlippe 42 beziehungsweise einem inneren Dichtungsbereich und von einem äußeren Dichtungsbereich 44 seitlich begrenzt. Über einen zwischen der inneren Dichtlippe 42 und dem äußeren Dichtbereich 44 verlaufenden Teil des Dichtelements 24 ist die Rastaufnahme 40 in der ihrer Öffnung zur Aufnahme eines Rastelements 45 des Einsatzelements 22 gegenüberliegenden Richtung begrenzt. Die Rastaufnahme 40 verfügt über eine seitliche Ausnehmung zur Aufnahme einer Rastnase 46 des Rastelements 45. Die innere Dichtlippe 42 und der äußere Dichtungsbereich 44 sind dazu vorgesehen, eine Abdichtung zwischen dem Rohrelement 14 und dem Gehäuse 10 bereitzustellen. Vorzugsweise sind die innere Dichtlippe 42 und der äußere Dichtungsbereich 44 elastisch ausgebildet. Die innere Dichtlippe 42 erstreckt sich schräg zum Rohrabschnitt 14, so dass sie einerseits mit einem Dichtungsbereich eng am Rohrelement 14 anliegen kann und andererseits an ihrem mit dem Nasenende des Rastelements 45 zusammenwirkenden Bereich eine Haltekraft auf dieses Rastelement 45 ausüben kann. Das Dichtelement 24 verfügt außerdem über eine weitere Rastverbindung 50, die sich bezüglich des Einsatzelementes 22 auf der gegenüberliegenden Seite des Dichtelements 24 befindet. Die Rastverbindung 50 umfasst einen ebenfalls elastischen Rastvorsprung 52, der Teil des Dichtelements 24 ist und sich von dem Dichtelement 24 in Richtung einer Haltevorrichtung 28 erstreckt. Eine Außenseite des Rastvorsprungs 52 liegt am Gehäuse 10 an, dies ist aber nicht notwendig. Ein Dichtungshalter 29 ist derart angeordnet, dass zwischen dem Dichtungshalter 29 und dem Rastvorsprung 52 eine Rastaufnahme für ein Rastelement 54 der Haltevorrichtung 28 ausgebildet ist. Haltevorrichtung 28 und Dichtungshalter 29 können einstückig ausgebildet sein. Es ist auch vorstellbar, dass der Dichtungshalter 29 und die Haltevorrichtung fest miteinander verbunden sind, etwa indem sie miteinander verklebt, verschweißt oder verschraubt sind. Das Rastelement 54 kann als Teil der Haltevorrichtung ausgebildet sein oder fest mit diesem verbunden sein. Insbesondere können die Haltevorrichtung 28, der Dichtungshalter 29 und das Rastelement 54 als ein Bauteil ausgeführt sein. Die Rastaufnahme für das Rastelement 54 weist eine Vertiefung zur Aufnahme einer am Rastelement 54 vorgesehenen Rastnase 56 auf. Durch die elastische Kraft des Rastvorsprungs 52 des Dichtelements 24 wird eine Haltekraft zwischen dem Vorsprung 52 und dem Dichtungshalter 29 auf das Rastelement 54 ausgeübt, die eine gute Kopplung zwischen der Haltevorrichtung 28 und der Dichtung 24 bietet. Der Dichtungshalter 29 kann auf das Dichtungselement 24 eine Rückhaltekraft in Richtung des Einsatzelementes ausüben. Es kann vorgesehen sein, dass die Dichtung 24 am Dichtungshalter 29 befestigt ist, etwa durch eine Verklebung. Dichtungshalter 29 und Haltevorrichtung 28 können ebenfalls aus einem steifen Material wie einem Kunststoff oder einem metallischen Material bestehen. In dem gezeigten Beispiel ist der Dichtungshalter 29 bezüglich des Rohrabschnitts 14 innerhalb der Haltevorrichtung 28 angeordnet.

Alternativ kann auch vorgesehen sein, dass der Rastvorsprung 52 sich statt am Gehäuse 10 am Rohrabschnitt 14 erstreckt und der Dichtungshalter 29 einen Teil der Haltevorrichtung 28 umgibt. Zwischen der Haltevorrichtung 28 und dem Rohrelement 14 befindet sich ein sich im Wesentlichen konisch zum Einsatzelement 22 hin verbreitender Aufnahmeraum zur Aufnahme eines Klemmrings 26. Der Klemmring 26 besteht aus einem metallischen Material, etwa Bronze, Messing oder Stahl. Während die anderen den Rohrabschnitt 14 umgebenden Komponenten diesen vorzugsweise vollständig umgeben und besonders bevorzugt im Wesentlichen um die gezeigte Zentralachse A rotationssymmetrisch ausgebildet sind, bildet der Klemmring 26 keinen vollständigen Ring. Vielmehr verfügt über einen Schlitz, der ihm eine Federkraft verleiht. Der Querschnitt des Klemmrings 26 verfügt über eine konische Form, die sich in Richtung des Dichtungselements 24 verbreitert und die sich in den verjüngenden Teil des konischen Aufnahmeraums zwischen Haltevorrichtung 28 und Rohrabschnitt 14 anzulegen vermag. Ferner verfügt der Klemmring 26 über eine in Richtung des Dichtungselements 24 auf den Rohrabschnitt 14 ausgerichtete innere Schneidkante, mit der sich der Klemmring 26 in das Rohrelement 14 hinein schneiden kann. Der Klemmring 26 ist allerdings mit einer zylindrischen Oberfläche ausgebildet, um zu vermeiden, dass er das Rohrelement 14 zerschneidet. In einer Aufnahmeöffnung 38 der Gehäusevertiefung 11 ist ein Abschlusselement 30 vorgesehen. Das Abschlusselement 30 verfügt über ein Profil, das demjenigen entspricht, das im Bereich der Aufnahmeöffnung 38 des Gehäuses 10 ausgebildet ist. Um die Rohrverbindungseinrichtung 20 vor Verschmutzung und Beschädigung zu schützen, verfügt das Abschlusselement 30 über eine nach Außen gerichtete Abdeckung 31. Das Abschlusselement 30 ist auf geeignete Art am Gehäuse 10 befestigt hält die übrigen Komponenten der Rohrverbindungseinrichtung 20 in der Vertiefung 11. Es kann insbesondere vorgesehen sein, dass das Abschlusselement 30 und das Gehäuse 10 über eine bajonettartige Verbindung miteinander verbunden sind. Es ist auch vorstellbar, dass das Abschlusselement 30 in die Vertiefung 11 eingeschraubt ist oder vermittels Schraubenelementen am Gehäuse 10 verschraubt ist. Das Einsatzelement 22 weist eine Außenbewandung 34 auf, welche den Rohrabschnitt 14 von außen umgibt. Von der Außenbewandung 34 erstreckt sich das Rastelement 45 mit der Rastnase 46 in Richtung des Dichtelements 24. Ferner weist das Einsatzelement 22 eine Innenbewandung 36 auf, die innerhalb des Rohrabschnitts 14 angeordnet ist. Der Rohrabschnitt 14 erstreckt sich in einem Aufnahmebereich 32, der allgemein durch die Außenbewandung 34 des Einsatzelements 22, der inneren Dichtlippe 42, dem Dichtungshalter 29 und dem Klemmring 26 definiert ist und sich somit in diesem Beispiel innerhalb der Gehäusevertiefung 11 erstreckt. In diesem Fall definiert eine Aufnahmeöffnung 38 des Abschlusselements einen Teil des Aufnahmebereichs 32. Ein Teil des Aufnahmebereichs 32 ist durch die Wände des Rohrabschnitts 14 und durch die Innenbewandung 36 belegt, während der Rest des Aufnahmebereichs 32 im Wesentlichen für eine Fluidströmung zur Verfügung steht. Ein Endbereich des Rohrabschnitts 14 ist zwischen der Innenbewandung 36, der Außenbewandung 34 und einem zwischen der Innenbewandung 36 und der Außenbewandung 34 verlaufenden Zwischenbereich 35 aufgenommen. Innenbewandung 36, Außenbewandung 34 und Zwischenbereich 35 sind Teile des Einsatzelements 22 und können einstückig ausgebildet sein, etwa indem das Einsatzelement durch ein geeignetes Gussverfahren entsprechend geformt wird. Die Teile des Einsatzelements 22 können auch durch geeignete Mittel wie beispielsweise Verkleben, Verschweißen oder Verschrauben fest miteinander verbunden sein. Der Rohrabschnitt 14 kann an den Zwischenbereich 35 anschlagen, so dass dieser ein Eindringen des Rohrabschnitts in die Rohrverbindungseinrichtung 20 begrenzt. Die Innenbewandung 36 definiert einen Innenbereich, der über nicht gezeigte Öffnungen eine Fluidverbindung zwischen dem Aufnahmebereich 32 und dem Fluidanschluss 12 ermöglicht, so dass ein Fluid von dem Aufnahmebereich 32 durch den in diesem vorgesehenen Innenbereich zu dem Fluidanschluss oder in umgekehrter Richtung strömen kann. Insbesondere verfügt die Innenbewandung 36 über eine quer zur Zentralachse A verlaufende Hauptöffnung. Die Innenbewandung kann eine oder mehrere seitliche beziehungsweise axiale Öffnungen aufweisen, die eine Fluidströmung zwischen Innenbereich und dem außerhalb des Innenbereiches befindlichen Aufnahmebereich ermöglichen. Jede der seitlichen beziehungsweise axialen Öffnungen verfügt über zumindest eine Teilfläche, deren Flächennormalen schräg oder orthogonal zur Aufnahmerichtung ausgerichtet ist. Auf seiner dem Fluidanschluss 12 zugewandten Seite weist das Einsatzelement 22 eine Aufnahme 23 auf, in welcher ein von einem Boden der Gehäusevertiefung 11 vorstehender Teil des Fluidanschlusses 12 aufgenommen ist. Die Aufnahme 23 ist dazu geeignet profiliert. Dabei ist vorgesehen, dass die Aufnahme 23 den Fluidanschluss 12 teilweise übergreift. Es ist zweckmäßig, wenn ein äußerer Randbereich der Aufnahme 23 sich am Gehäuse 10 abstützen kann.

Bei der Montage wird das Dichtelement 24 über die Rastverbindung 25 mit dem Einsatzelement 22 verbunden. Auf der anderen Seite des Dichtelements 24 können der Dichtungshalter 29, der Klemmring 26 und die Haltevorrichtung 28 derart zusammengefügt werden, dass sich zwischen Dichtungshalter 29, Haltevorrichtung 28 und dem Dichtelement 24 ebenfalls eine Rastverbindung 50 ergibt. Es ist dabei unerheblich, welche der Rastverbindungen 25, 50 zuerst eingerastet wird. Um ein systematisches Montieren zu ermöglichen, kann allerdings zuerst das Einsatzelement 22 mit dem Dichtelement 24 rastend verbunden werden. Der Klemmring 26 wird in der im Wesentlichen seiner konischen Form entsprechenden konischen Aufnahme der Haltevorrichtung 28 eingesetzt. In dieser konischen Aufnahme kann er sich, wie in der Figur 1 zu sehen ist, mit etwas Spiel bewegen. Durch die Rastverbindungen 25 und 50 halten das Einsatzelement 22, das Dichtelement 24, die Haltevorrichtung 28 sowie Dichtungshalter 29 und Klemmring 26 ohne zusätzlichen äußeren Einfluss zusammen. Dies ermöglicht es, dass diese Elemente außerhalb eines Gehäuses zusammengesetzt beziehungsweise vormontiert werden und als gemeinsamer Block in die Vertiefung 11 des Gehäuses 10 eingesetzt werden können. Beim Einsetzen dieses durch Rastverbindungen miteinander verbundenen Blocks ermöglicht es die Aufnahme 23 am Einsatzelement 22, dass sich die gewünschte Ausrichtung zwischen Fluidanschluss 12 und Einsatzelement 22 ergibt und somit der gesamte eingeführte Block wie gewünscht ausgerichtet ist. Das Abschlusselement 30 kann dann zum Schutz der Rohrverbindungseinrichtung 20 eingesetzt und befestigt werden. Selbstverständlich ist es auch möglich, zuerst das Einsatzelement 22 am Fluidanschluss 12 anzusetzen und nachfolgend das Dichtelement 24, die Haltevorrichtung 28, den Klemmring 26 sowie den Dichtungshalter 29 zu befestigen, bevor das Abschlusselement 30 eingesetzt wird. Durch die Aufnahmeöffnung 38 des Abschlusselements 30 kann dann das Rohrelement 14 in die Rohrverbindungsvorrichtung 20 eingeführt und über die Innenbewandung 36 geschoben werden. Dabei spannt sich der Klemmring 26 um die Außenwand des Rohrelements 14 und kann innerhalb der ihn aufnehmenden konischen Ausnehmung um das dort vorhandene Spiel in Richtung des Fluidanschluss 12 mitgenommen werden. Das Rohrelement 14 kann maximal so weit eingeschoben werden, bis es an dem Zwischenbereich 35 des Einsatzelements 22 anschlägt. Wird nun eine Kraft ausgeübt, um das Rohrelement 14 aus der Rohrverbindungseinrichtung 20 zu entfernen, schneidet sich die Schneidkante des Klemmrings 26 teilweise in die Außenhülle des Rohrabschnitts 14. Dadurch wird der Klemmring 26 in Richtung der Aufnahmeöffnung 34 mitgenommen. Diese Bewegung endet allerdings, sobald sich der Klemmring 26 durch das sich verjüngende Ende der konischen Aufnahme nicht weiter in Richtung der Aufnahmeöffnung bewegen kann. Da das Rohrelement 14 durch die Schneidkante des Klemmrings 26 festgehalten wird, wird somit verhindert, dass das Rohrelement 14 sich aus der Rohrverbindungseinrichtung 20 löst.

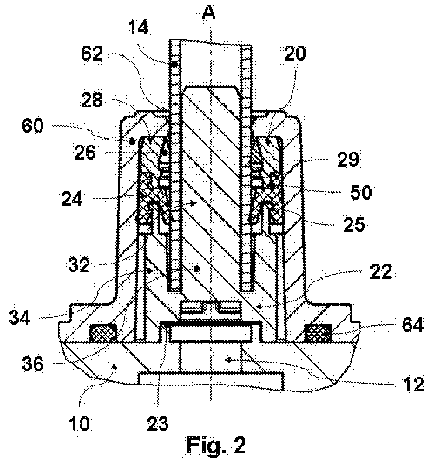

Figur 2 zeigt eine außen an einem Gehäuse 10 angebrachte Rohrverbindungseinrichtung 20. Der Aufbau der Rohrverbindungseinrichtung 20 entspricht in Wesentlichen Teilen dem der in Figur 1 gezeigten Anordnung, so dass hier lediglich auf die Unterschiede eingegangen wird. Aus Gründen der Übersichtlichkeit sind die Figuren 2 bis 4 nicht so ausführlich mit Bezugszeichen versehen wie die Figur 1. Der Fachmann erkennt anhand der Zeichnungen leicht die Gemeinsamkeiten und Unterschiede der Figuren. Figur 2 zeigt eine Variante, in welcher der Fluidanschluss 12 an der Außenseite eines Gehäuses 10 angebracht ist und nicht in einer Gehäusevertiefung angeordnet ist wie in Figur 1 gezeigt. Für diesen Fall ist ein Rohrverbindungsgehäuse 60 vorgesehen, dass die Rohrverbindungseinrichtung 20 umgibt und das an den Gehäuse 10 befestigt ist. Das Rohrverbindungsgehäuse 60 weist eine Aufnahmeöffnung 62 auf, welche einen Rohrabschnitt 14 aufnehmen kann. Das Rohrverbindungsgehäuse 60 ersetzt in diesem Fall das Abschlusselement 30, das für eine in einer Vertiefung eines Gehäuses angeordnete Rohrverbindungseinrichtung 20 zweckmäßiger ist. Eine Dichtung 64 ist zur Abdichtung des Rohrverbindungsgehäuses 60 nach außen vorgesehen. Die Aufnahme 23 des Einsatzes 22 ist in diesem Fall derart ausgebildet, dass eine Innenseite der Aufnahme sich an einem um den Fluidanschluss 12 ausgebildeten Vorsprung des Gehäuses 10 abstoßen kann.

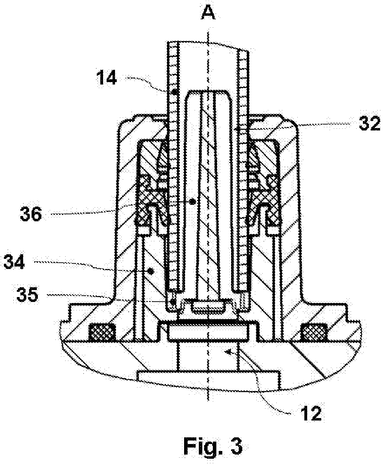

Figur 3 zeigt eine um 90 Grad gedrehte Seitenansicht der Rohrverbindungseinrichtung 20 aus Figur 2. In dieser Figur lässt sich erkennen, dass die Innenbewandung 36 mit einem Abstand zur inneren Wand des Rohrabschnitts 14 ausgebildet ist und über Schlitze in der Seite verfügt, die einen Luftstrom durch die Seitenwände erlauben. Man erkennt auch, dass sich die Innenbewandung 36 in Richtung von dem Fluidanschluss 12 und von Einsatzelement 22 weg verjüngt.

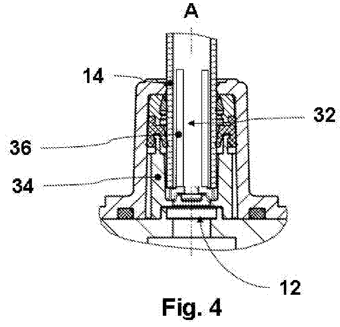

Figur 4 zeigt eine weitere Alternative einer außen an einem Gehäuse angeordneten Rohrverbindungseinrichtung 20. In diesem Fall ist vorgesehen, dass die Innenbewandung 36 aus mehreren im Wesentlichen parallel zueinander angeordneten, streifenähnlichen Wandelementen gebildet ist. Zwischen den Wandelementen befinden sich seitliche beziehungsweise axiale Öffnungen, durch welche Druckluft strömen kann. Die Wandelemente, von denen zwei zu sehen sind, können im Querschnitt kreuzförmig angeordnet sein oder gleichmäßig auf einem Kreis angeordnet sein. Diese Variante ist besonders vorteilhaft, wenn mehrere Rohrverbindungen in einem am Gehäuse befestigten Deckel ausgebildet sind.

Für die Montage der Rohrverbindungseinrichtung 20, die extern am Gehäuse 10 angebracht wird, gilt im Wesentlichen das oben ausgeführte. Es wird lediglich der vormontierte Block an der Außenseite des Gehäuses 10 angebracht und gegebenenfalls daran befestigt oder die Komponenten einzeln nacheinander am Gehäuse 10 angeordnet und über die Rastverbindungen 25, 50 miteinander gekoppelt. Dann wird das Rohrverbindungsgehäuse 60 über der Rohrverbindungseinrichtung 20 angebracht und mit dem Gehäuse 10 fest verbunden. Es ist auch möglich, die Einsatzeinrichtung 22 direkt am Gehäuse 10 zu befestigen. Es kann auch zuerst der vormontierte Block ins Rohrverbindungsgehäuse 60 eingelegt und dann das Rohrverbindungsgehäuse 60 am Gehäuse 10 befestigt werden.

Es versteht sich, dass die beschriebenen Varianten der Innenbewandung sowohl für die in einer Vertiefung angebrachte Leitungsverbindungsanordnung als auch für die an einer Außenseite eines Gehäuses angebrachte Leitungsverbindungsanordnung einsetzbar sind.

Die beschriebene Leitungsverbindungseinrichtung ermöglicht durch die Rastverbindungen eine Vormontage einzelner Komponenten. Dies erleichtert den Zusammenbau erheblich. Darüber hinaus wird durch die Ausgestaltung der Innenbewandung nicht nur die Montage erleichtert, sondern es kann auch ein verbessertes Strömungsverhalten im Übergangsbereich von Leitungsabschnitt zu Fluidanschluss erreicht werden. Die Leitungsverbindungseinrichtung kann unproblematisch für unterschiedliche Arten von Fluidanschlussanordnungen ohne große Änderungen eingesetzt werden. Die Leitungsverbindungsanordnung eignet sich sogar dazu, an bereits bestehenden und verwendeten Gehäusen auf einfach Art nachgerüstet zu werden, da lediglich einige Profilformen, beispielsweise die Form der Aufnahme des Einsatzelements, entsprechend angepasst werden müssen. Dabei lassen sich die gewünschten Profilformen leicht durch Gussverfahren erzeugen. Außerdem kann die Leitungsverbindungseinrichtung beispielsweise zum Austausch oder zu Wartung ausgebaut werden, ohne dass sie dabei beschädigt oder zerstört werden müsste.

### Bezugszeichenliste:

- 10: Gehäuse
- 11: Gehäusevertiefung
- 12: Fluidanschluss
- 14: Rohrabschnitt
- 20: Rohrverbindungseinrichtung
- 22: Einsatzelement
- 23: Aufnahme
- 24: Dichtelement
- 25: Rastverbindung
- 26: Klemmring
- 28: Haltevorrichtung
- 29: Dichtungshalter
- 30: Abschlusselement
- 31: Abschlussplatte
- 32: Aufnahmebereich
- 34: Außenbewandung
- 35: Zwischenbereich
- 36: Innenbewandung
- 38: Aufnahmeöffnung
- 40: Rastaufnahme
- 42: Innere Dichtlippe
- 44: Äußerer Dichtbereich
- 45: Rastelement
- 46: Rastnase
- 50: Rastverbindung
- 52: Rastvorsprung
- 54: Rastelement
- 56: Rastnase
- 60: Rohrverbindungsgehäuse
- 62: Aufnahmeöffnung
- 64: Dichtung
- A: Zentralachse

## Patentansprüche

1. Leitungsverbindungseinrichtung (20) zur Verbindung eines Leitungsabschnitts (14) mit einem Fluidanschluss (12), wobei die Leitungsverbindungseinrichtung (20) umfasst:
den Fluidanschluss (12), einen Aufnahmebereich (32) für den Leitungsabschnitt (14);
eine den Aufnahmebereich (32) zumindest teilweise umgebende Halteeinrichtung (26, 28), die es vermag, auf zumindest einen Teil des Leitungsabschnitts (14) eine Haltekraft auszuüben;
ein den Aufnahmebereich (32) zumindest teilweise umgebendes Einsatzelement (22); und
eine Dichteinrichtung (24), die zwischen der Halteeinrichtung (26, 28) und dem Einsatzelement (22) angeordnet oder anordenbar ist;
wobei die Dichteinrichtung (24) über Rastverbindungseinrichtungen (25, 50) einrastend mit dem Einsatzelement (22) und der Halteeinrichtung (26, 28) verbunden oder verbindbar ist,
**dadurch gekennzeichnet, dass** das Einsatzelement (22) eine Fluidverbindung zwischen dem Aufnahmebereich (32) und dem Fluidanschluss (12) vermittelt.

2. Leitungsverbindungseinrichtung nach Anspruch 1, wobei die Dichteinrichtung (24) Rastaufnahmen (40) zur Aufnahme eines Rastelements (45) des Einsatzelements (22) und der Halteeinrichtung (26, 28) aufweist.

3. Leitungsverbindungseinrichtung nach Anspruch 1 oder 2, wobei die Dichteinrichtung (24) zumindest teilweise aus einem elastischen Dichtmaterial, insbesondere einem Gummimaterial, ausgebildet ist.

4. Leitungsverbindungseinrichtung nach einem der Ansprüche 1 bis 3, wobei die Dichteinrichtung (24) an einem Dichtungshalter (29) angebracht ist.

5. Leitungsverbindungseinrichtung nach Anspruch 4, wobei mindestens eine Rastaufnahme zumindest teilweise durch den Dichtungshalter (29) gebildet ist.

6. Leitungsverbindungseinrichtung nach einem der Ansprüche 1 bis 5, wobei die Leitungsverbindungseinrichtung (20) zum Verbinden des Leitungsabschnitts (14) mit einem in einer Gehäusevertiefung (11) angeordneten Fluidanschluss (12) in der Gehäusevertiefung (11) aufgenommen oder aufnehmbar ist.

7. Leitungsverbindungseinrichtung nach einem der Ansprüche 1 bis 5, wobei die Leitungsverbindungseinrichtung (20) zum Verbinden des Leitungsabschnitts (14) mit einem an einer Außenseite eines Gehäuses (11) angeordneten Fluidanschluss (12) von außen an dem Gehäuse (11) angebracht oder anbringbar ist.

8. Leitungsverbindungseinrichtung nach Anspruch 7, umfassend ein Leitungsverbindungsgehäuse (60) mit einer Aufnahmeöffnung (62) für den Leitungsabschnitt (14).

9. Leitungsverbindungseinrichtung nach einem der Ansprüche 1 bis 8
wobei der Leitungsabschnitt (14) in einer definierten Aufnahmerichtung in den Aufnahmebereich (32) aufgenommen oder aufnehmbar ist;
wobei das Einsatzelement (22) eine Außenbewandung (34), welche den Aufnahmebereich (32) zumindest teilweise umgibt, und eine innerhalb des Aufnahmebereichs (32) angeordnete Innenbewandung (36) aufweist, wobei zwischen der Innenbewandung (36) und der Außenbewandung (34) zumindest ein Teil des Leitungsabschnitts (14) aufnehmbar ist;
wobei die Innenbewandung (36) einen Innenbereich umgibt und die Innenbewandung (36) über mindestens eine axiale Öffnung verfügt, welche eine Fluidverbindung zwischen dem Innenbereich und dem außerhalb des Innenbereichs befindlichen Aufnahmebereich (32) erlaubt;
wobei die mindestens eine axiale Öffnung über zumindest eine Teilfläche verfügt, deren Flächennormalen schräg oder orthogonal zur Aufnahmerichtung ausgerichtet ist.

10. Verfahren zur Montage der Leitungsverbindungseinrichtung (20) nach einem der Ansprüche 1 bis 9, wobei eine Dichteinrichtung (24) über Rastverbindungseinrichtungen (25, 50) mit einem Einsatzelement (22) und einer Halteeinrichtung (26, 28) einrastend verbunden wird.

11. Verfahren nach Anspruch 10, wobei nach dem einrastenden Verbinden die Leitungsverbindungseinrichtung (20) in eine Gehäusevertiefung (11) eingeführt wird.

12. Verfahren nach Anspruch 10, wobei nach dem einrastenden Verbinden die Leitungsverbindungseinrichtung (20) von außen an einem Gehäuse (10) angebracht wird.

13. Verfahren nach Anspruch 12, wobei die Leitungsverbindungseinrichtung (20) in einem Leitungsverbindungsgehäuse (60) aufgenommen wird, wobei das Leitungsverbindungsgehäuse (60) mit dem Gehäuse (10) verbunden wird.

14. Verfahren nach einem der Ansprüche 10 bis 13, wobei der Leitungsabschnitt (14) in die Leitungsverbindungseinrichtung (20) eingeführt wird.

15. Ventilgehäuse mit mindestens einem Fluidanschluss (12) und mindestens einer Leitungsverbindungseinrichtung (20) nach einem der Ansprüche 1 bis 9.

## Claims

1. Conduit connection device (20) for connecting a conduit section (14) to a fluid port (12), the conduit connection device (20) comprising:
the fluid port (12);
a reception region (32) for the conduit section (14);
a holding device (26, 28), which at least partially surrounds the reception region (32) and which is capable of applying a holding force to at least a part of the conduit section (14);
an insert element (22), which at least partially surrounds the reception region (32); and
a sealing device (24), which is or can be placed between the holding device (26, 28) and the insert element (22);
wherein the sealing device (24) is or can be latched to the insert element (22) and the holding device (26, 28) via latching connection devices (25, 50), **characterised in that** the insert element (22) establishes a fluid connection between the reception region (32) and the fluid port (12).

2. Conduit connection device according to claim 1, wherein the sealing device (24) comprises latching receptacles (40) for the accommodation of a latching element (45) of the insert element (22) and the holding device (26, 28).

3. Conduit connection device according to claim 1 or 2, wherein the sealing device (24) is at least partially made of an elastic sealing material, in particular of a rubber material.

4. Conduit connection device according to any of claims 1 to 3, wherein the sealing device (24) is mounted on a seal holder (29).

5. Conduit connection device according to claim 4, wherein at least one latching receptacle is at least partially represented by the seal holder (29).

6. Conduit connection device according to any of claims 1 to 5, wherein the conduit connection device (20) is or can be, for connecting the conduit section (14) to a fluid port (12) located in a housing recess (11), accommodated in the housing recess (11).

7. Conduit connection device according to any of claims 1 to 6, wherein the conduit connection device (20) is or can be, for connecting the conduit section (14) to a fluid port (12) located on an outside of a housing (11), mounted on the outside of the housing (11).

8. Conduit connection device according to claim 7, comprising a conduit connection housing (60) with a reception opening (62) for the conduit section (14).

9. Conduit connection device according to any of claims 1 to 8,
wherein the conduit section (14) is or can be received in the reception region (32) in a defined reception direction;
wherein the insert element (22) has an outer wall (34), which at least partially surrounds the reception region (32), and an inner wall (36) located within the reception region (32), wherein at least a part of the conduit section (14) can be accommodated between the inner wall (36) and the outer wall (34);
wherein the inner wall (36) surrounds an inner region and the inner wall (36) has at least one axial opening which allows a fluid connection between the inner region and the reception region (32) outside the inner region;
wherein the at least one axial opening has at least one part-face the face normal of which is oriented at an angle or orthogonally to the reception direction.

10. Method for assembling the conduit connection device (20) according to any of claims 1 to 9, wherein a sealing device (24) is latched to an insert element (22) and to a holding device (26, 28) via latching connection devices (25, 50).

11. Method according to claim 10, wherein, following the latching operation, the conduit connection device (20) is inserted into a housing recess (11).

12. Method according to claim 10, wherein, following the latching operation, the conduit connection device (20) is mounted on a housing (10) from the outside.

13. Method according to claim 12, wherein the conduit connection device (20) is accommodated in a conduit connection housing (60), wherein the conduit connection housing (60) is connected to the housing (10).

14. Method according to any of claims 10 to 13, wherein the conduit section (14) is inserted into the conduit connection device (20).

15. Valve housing having at least one fluid port (12) and at least one conduit connection device (20) according to any of claims 1 to 9.

## Revendications

1. Dispositif (20) de raccordement de conduit pour raccorder un tronçon (14) de conduit à un raccord (12) pour du fluide, le dispositif (20) de raccordement de conduit comprenant :
le raccord (12) pour du fluide,
une partie (32) de réception du tronçon (14) de conduit ;
un dispositif (26, 28) de maintien, qui entoure au moins en partie la partie (32) de réception et qui permet d'appliquer une force de maintien à la au moins une partie du tronçon (14) de conduit ;
un élément (22) d'insertion entourant au moins en partie la partie (32) de réception ;
un dispositif (24) d'étanchéité, qui est disposé entre le dispositif (26, 28) de maintien et l'élément (22) d'insertion ou qui peut l'être ;
dans lequel le dispositif (24) d'étanchéité est relié à l'élément (22) d'insertion et au dispositif (26, 28) de maintien par encliquetage par l'intermédiaire de dispositifs (25, 50) d'encliquetage ou peut l'être,
**caractérisé en ce que** l'élément (22) d'insertion procure une liaison fluidique entre la partie (32) de réception et le raccord (12) pour du fluide.

2. Dispositif de raccordement de conduit suivant la revendication 1, dans lequel le dispositif (24) d'étanchéité a des logements (40) d'encliquetage pour la réception d'un élément (45) d'encliquetage de l'élément (22) d'insertion et du dispositif (26, 28) de maintien.

3. Dispositif de raccordement de conduit suivant la revendication 1 ou 2, dans lequel le dispositif (24) d'étanchéité est constitué au moins en partie d'un matériau d'étanchéité élastique, notamment d'un matériau en caoutchouc.

4. Dispositif de raccordement de conduit suivant l'une des revendications 1 à 3, dans lequel le dispositif (24) d'étanchéité est mis sur un porte-joint (29).

5. Dispositif de raccordement de conduit suivant la revendication 4, dans lequel au moins un logement d'encliquetage est formé au moins en partie par le porte-joint (29) .

6. Dispositif de raccordement de conduit suivant l'une des revendications 1 à 5, dans lequel le dispositif (20) de raccordement de conduit est, pour raccorder le tronçon (14) de conduit à un raccord (12) pour du fluide disposé dans une cavité (11) de boîte, reçu dans la cavité (11) de boîte ou peut l'être.

7. Dispositif de raccordement de conduit suivant l'une des revendications 1 à 5, dans lequel le dispositif (20) de raccordement de conduit est, pour raccorder le tronçon (14) de conduit à un raccord (12) pour du fluide disposé d'un côté extérieur d'une boîte (11), mis de l'extérieur sur la boîte (11) ou.peut l'être.

8. Dispositif de raccordement de conduit suivant la revendication 7, comprenant une enveloppe (60) de raccordement de conduit ayant une ouverture (62) de réception du tronçon (14) de conduit.

9. Dispositif de raccordement de conduit suivant l'une des revendications 1 à 8, dans lequel le tronçon (14) de conduit est reçu dans un sens de réception défini dans la partie (32) de réception ou peut l'être,
dans lequel l'élément (22) d'insertion a une paroi (34) extérieure, qui entoure au moins en partie la partie (32) de réception, et une paroi (36) intérieure, disposée à l'intérieur de la partie (32) de réception, au moins une partie du tronçon (14) de conduit pouvant être reçue entre la paroi (36) intérieure et la paroi (34) extérieure,
dans lequel la paroi (36) intérieure entoure une partie intérieure et la paroi (36) intérieure dispose d'au moins une ouverture axiale, qui permet une communication fluidique entre la partie intérieure et la partie (32) de réception se trouvant à l'extérieur de la partie intérieure,
dans lequel la au moins une ouverture axiale dispose d'au moins une surface partielle, dont la normale est inclinée par rapport à la direction de réception ou lui est orthogonale.

10. Procédé de montage du dispositif (20) de raccordement de conduit suivant l'une des revendications 1 à 9 dans lequel un dispositif (24) d'étanchéité est relié par encliquetage à un élément (22) d'insertion et à un dispositif (26, 28) de maintien par des dispositifs (25, 50) de liaison par encliquetage.

11. Procédé suivant la revendication 10, dans lequel, après la liaison par encliquetage, le dispositif (20) de raccordement de conduit est inséré, dans une cavité (11) de boîte.

12. Procédé suivant la revendication 10, dans lequel, après la liaison par encliquetage, le dispositif (20) de raccordement de conduit est mis de l'extérieur sur une boîte (10).

13. Procédé suivant la revendication 12, dans lequel le dispositif (20) de raccordement de conduit est reçu dans une enveloppe (60) de raccordement de conduit, l'enveloppe (60) de raccordement de conduit étant reliée à la boîte (10).

14. Procédé suivant l'une des revendications 10 à 13, dans lequel on introduit le tronçon (14) de conduit dans le dispositif (20) de raccordement de conduit.

15. Boîte de soupape, ayant au moins un raccord (12) pour du fluide et au moins un dispositif (20) de raccordement de conduit suivant l'une des revendications 1 à 9.
